# EUROPEAN PATENT APPLICATION

(11) **EP 1 459 925 A2**
(43) Date of publication of application: **22.09.2004**
(21) Application number: 04425178.3
(22) Date of filing: 16.03.2004
(51) Int. Cl.: B60K 15/04

(54) **Safety coupling for diesel oil tank filler**

(30) Priority: 20.03.2003 IT FR20030006 U
(71) Applicant: Gigliozzi, Danilo, 03036 Isola del Liri (Frosinone) (IT)
(72) Inventor: Gigliozzi, Danilo, 03036 Isola del Liri (Frosinone) (IT)

(57) **Abstract**

The innovation regards a safety union with an opening cursor which prevents accidental insertions of petrol in tanks of vehicles feeded with diesel oil.

Such union is characterized by the fact that its construction previews an entrance hole, an opening cursor, and an exit hole delimited from one mobile safety door; the entrance hole, at last in one point, has an inferior diameter than the one of the petrol gun device for the forced recovery of vapors. The distance between the entrance hole and the exit hole of the safety union, is greater than the distance between the mentioned device and the exit mouth of the petrol gun; with the help of the safety door attacted to the edge of the exit hole it prevents the petrol to penetrate into the tank of the diesel oil feeded cars. In fact, only with a diesel oil, on which has been opportunely installed a bush, it is possible to push a mobile cursor, that, at turn, opens the safety door, allowing the liquid to flow inside the diesel oil tank of the car.

## Description

The present innovation regards a safety union with an opening cursor for the fuel refuelling in means feeded with diesel oil.

More in detail this innovation regards union, as the one above mentioned type that prevent accidental insertions of petrol in tanks of vehicles feeded with diesel oil, avoiding therefore damages to the motor of motors vehicle, trucks, tractors, electricity-generating and similar groups.

Hereafter the description will be focused on the safety of the motor vehicles; however it's obvious that the innovation doesn't have to be considered limited to this specific use, since the union could be used for other types of vehicles and machineries.

It's common knowledge that at present exists a device installed on the vehicles, which allows to avoid that in service stations, where your vehicle can be resupplied, you can insert accidentally the diesel oil in the tank of a petrol feeded car. An error of this type, in fact, would compromise a correct functioning of the motor.

A system that avoids the inverse procedure hasn't been adopted up to today. In particular it is possible, by mistake, to insert the petrol in the tank of the vehicle feeded with diesel oil.

The damages to the mechanical organs of the car and the uneasiness to the passengers because of this error are remarkable and in many cases extremely onerous.

At present in the service areas the distributors of petrol and diesel oil are often distinguished thanks to their colour and disposition.

This facilitates the recognition of the correct pump of distribution.

However, it doesn't guarantee a solution to the problem. For example especially in the self-service areas, when you drive not your car (for example the hired car), or when you have bought a new car feeded with fuel diffrent from the one you have used before, it's obvious that the solutions taken up to now in this situation are not sufficient enough. To confirm that the problem exists there are statistics of interventions by highway assistance companies.

Some of the substantial differences between the guns of refuelling for the petrol and those for the diesel oil, consist of a various length and a various diameter of the tube that is inserted inside the fuel refuelling union.

Moreover, on the tube of the gun for the petrol refuelling, is previewed a device for the forced recovery of the vapors that is already obligatorily installed in all the systems of fuel distribution.

In the light of what has been stated above obviously at first there is the necessity to create some systems or devices that make the gun of the petrol distributor incompatible with the entrance of the car tank or some means feeded with diesel oil, such as the one proposed in this innovation; consequently it must be easily installed in the cars feeded with diesel oil.

In this case arrives the solution proposed in the present innovation.

Another object of this innovation is to make it possibly stick in the cars too that don't preview it when built.

The specific object of the present innovation is composed of a safety union for the fuel refuelling to install in means feeded with diesel oil situated at the entrance of the tube that brings fuel Into the tank of the vehicle and characterized by the fact that its construction previews an entrance hole, an opening cursor, and an exit hole delimited from one mobile safety door; the entrance hole, at last in one point has an inferior diameter than the one of the device of the petrol gun already obligatorily installed in all the systems of fuel distribution and previewed for the forced recovery of vapors of the same petrol. Such device is arranged coaxially and externally on the exit tube of a petrol pump gun. The distance between the entrance hole and the exit hole of the safety union, is greater than the distance between the union device previewed for the forced recovery of vapors and the exit mouth of above mentioned tube of the petrol gun; with the help of the safety door attacted to the edge of the exit hole which is situated on the inferior part of the safety union, so as to close in a rest position the light of the exit hole, and for the action of the means of the callback, combined with the door it prevents the petrol to penetrate into the tank of the diesel oil feeded cars. In fact, kept normally closed the exit hole of the union through safety door, only with a gun of the diesel oil in use near the systems of fuel distribution, on which has been opportunely installed a bush, it's possible to push a mobile opening cursor, that, at turn, opens the safety door, allowing the liquid to flow inside the diesel oil tank of the car; instead it's obvious that the above mentioned door can't be opened by the action of the tip of the exit mouth of the petrol gun tube, which eventually would be used in an improper way during the operations of refuelling for the above mentioned reasons and also because, between the entrance hole of the safety union and the opening cursor, they can preferably be carried out by the chutes (picture 6 in TABLE 4) in order to facilitate the entrance and the exit from the union part of the bush of the diesel oil gun and of the rounds (picture 6 in TABLE 4). In this there will not remain a step on which can be exercised a force able to push the opening cursor by the exit mouth 33(picture 3 in TABLE 2) of the gun (picture 3 in TABLE 2) for the petrol refuelling. Therefore the liquid towards the tank will flow down, without any clogging.

The guarantee that the safety union door can be opened only through the action of the bush that pushes a mobile opening cursor and that opportunely is installed on the exit tube of a gun for diesel oil pump, makes the new system of refuelling innovative and sure. According to the innovation, above mentioned means of callback for the safety door and the opening cursor can be constituted by a spring.

Preferably the innovation, of this safety union can have a substantially cylindrical shape. Moreover according to the innovation, a hem can be on the entrance which can comprise a lodging and/or a lock for a stopper. The present innovation will be described now as an illustrative and not respective object, accordingto executive variations wanted, with particular reference to the pictures of the enclosed designs, in which:
TABLE 1 shows a sight in section belonging to the safety union with an opening cursor according the innovation;
TABLE 2 shows the particulars of the diesel oil gun (picture 2) and the petrol gun (picture 3) putting in evidence the different length of the tube, through which the fuel passes, a different diameter, a device 31 (picture 3) for the forced recovery of the petrol vapors and the bush 23 (picture 2) which is opportunely installed on the exit tube of the gun for the diesel oil pump and which is used to push above-mentioned mobile cursor.
picture 4 (TABLE 3) shows a sight in section belonging to the safety union with an opening cursor according to the innovation, in which is inserted a gun 3 (TABLE 2) of a petrol distributor;
picture 5 (TABLE 3) shows a sight in section belonging to the safety union with an opening cursor according to the innovation, in which is inserted a gun of a diesel oil distributor on which has been opportunely inserted a bush which pushes the opening cursor that in turn has opened the safety stopper;
in reference to the pictures 4 and 5 (TABLE 3), it is immediately possible to deduce the function of the safety union (TABLE 1), indicated with a generic reference 1.
picture 7 ( TABLE 4) shows a sight in section belonging to the safety union with an opening cursor according to the innovation, on which is inserted a gun of a petrol distributor up to the device previewed for the forced recovery of petrol vapors and it points out the impossibility of the exit tube of the same diesel oil pump to reach, push and open the mobile door placedat the exit hole of the safety union.

The safety union 1 (TABLE 1) with the opening cursor according to the innovation, of a preferably cylindrical shape, comes Installed on the entrance of a tube that brings the fuel into the tank of the vehicle feeded with diesel oil and previews a diameter of the entrance hole 11 (TABLE 1), which allows the gun (picture 2 TABLE 2) of a diesel oil distributor, on which has been opportunely inserted a bush 23 ( picture 2) to enter and to push the opening cursor 5 (TABLE 1) through the bush 23 (picture 2), and to open the safety door 4 (TABLE 1), allowing the fuel to flow towards the tank. In contrast, the entrance hole 11 (TABLE 1) of the above-mentioned safety union (picture 1 TABLE 1) with an opening cursor 5 (TABLE 1) prevents the guns (picture 3 TABLE 2) of the petrol distributor, of being able to enter in a sufficient measure (picture 7 TABLE 4) and consequently open above-mentioned safety door 4 (TABLE 1).

As it is possible to observe, the guns 3 (TABLE 2) of the petrol distributors are equipped of a device for the forced recovery of vapors 31 (picture 3). The above-mentioned device 31 (picture 3) is arranged coaxially to the conduit 32 (picture 3) through which the petrol slides. Such device 31 (picture 3), obligatorily installed for the forced recovery of the petrol vapors, it previews a wider diameter of the section of the conduit 32 (picture 3). Moreover, the distance between the exit mouth of the petrol gun 33 (picture 3) and the above-mentioned device 31 (picture 3) previewed for the forced recovery of vapors is standard. The union 1 (TABLE 1) according to innovation, previews both a distance between the entrance hole 11 (picture 1) and the exit hole 12 (picture 1) greater than the distance between the exit mouth 33 (picture 3) of the petrol gun and the device previewed for the forced recovery of vapors 31 (picture 3) and, at least in one point, a diameter of the entrance hole 11 (picture 1) which preferably shouldn't have a perfectly circular shape (for example picture 8 and picture 9 TABLE 5) inferior than the one of the diameter of the above-mentioned device for the forced recovery of vapors 31 (picture 3), in a way to avoid that preferably all or at least a part of the above-mentioned device previewed for the forced recovery of vapors 31 (picture 3) can enter in the entrance hole 11 (TABLE 1) in evidence in picture 7. Therefore the exit mouth 33 (picture 3) of the petrol gun is not able neither to catch up the door 4 (TABLE 1) of the safety union 1 (TABLE 1) (as put in evidence in the picture 7 TABLE 4) nor to push the opening cursor 5 (TABLE 1). Not being able to open the above-mentioned safety door 4 (TABLE 1) follwing the procedure the condition which allows the filling of the diesel oil tank with the petrol doesn't exist because the distribution of the fuel is arrested in the same way as if the tank has already been filled up. This occurs thanks to the function of the device which is already present on the pumps in use in the fuel distribution systems.

The gun 2 (picture 2), which is normally in use in the diesel oil distributors, doesn't have any device previewed for the forced recovery of vapors. Therefore the conduit 21 (picture 2) has a uniform and smaller section of the device previewed for the forced recovery of vapors 31 (picture 3), for all its length. This allows the gun 2 (picture 2) to enter in union 1 (TABLE 1) for a greater length than the one of the petrol gun 3 (picture 3).

Using a diesel oil gun 2 (picture 2), on which has been opportunely inserted a bush 23 (picture 2) it's possible to push the opening cursor, that consequently can open the above-mentioned door 4 (TABLE 1) of the union (picture 1 TABLE 1), allowing a normal flow of fuel towards the tank. The above-mentioned bush 23 (picture 2), as also the entrance hole 11 (TABLE 1), must preferably have a geometric shape whose dimensions can In some portions interfere with those of a hypothetical hole, whose diameter is equivalent to the one of the device of the forced recovery petrol vapors, in other portions, instead, such dimensions must be slightly smaller than the hypothetical hole; an example could be the one In TABLE 5.

The TABLE 1 shows that, to execute refuelling, when the conduit 21 (picture 2) is extracted from union 1 (TABLE 1), and more exactly when the bush 23 (picture 2) doesn't push any more. Consequently the opening cursor 5 (TABLE 1) goes up again towards the entrance hole 11 (TABLE 1) and the door 4 (TABLE 1) closes again richlude the exit hole 12 (TABLE 1)of the union 1 (TABLE 1). This happens by means of recall 51 (TABLE 1) and 41 (TABLE 1) as for example a spring, restoring the function anti-insertion of petrol from a gun 3 (picture 3) in a tank of a vehicle feeded with diesel oil.

The union could be realized with the various exit holes as evidenced in table 6. The substantial difference is that in table 6 (picture 12), the cursor 7 (picture 13), being closed in its inferior part 71 (picture 13), obstructs the liquid flow towards the tank without necessarily needing the help of the safety door, but only using the diesel oil gun 2 (TABLE 2) on which a bush 23 (TABLE 2) has been opportunetly inserted, it is possible to push the opening cursor 7 (picture 14 TABLE 6) which allows the suitable liquid to flow down towards the tank through the passage windows 72 (picture 13 and picture 11). The benfits and the basic characteristics of this other type of union remain unchanged compared to the ones up to here illustrated.

On the base of the previous descriptions, it can be observed that the fundamental characteristic of this innovation is the certainty to render the union incompatible for the refuelling of the vehicles feeded with diesel oil to a traditional gun of a petrol distributor, by means of an opportune dimensioning of the length of the union 1 (TABLE 1), of the diameter and the shape of the same hole (an example in TABLE 5), and of the application of a bush carried out on purpose for the geometric shape and the size that has been given to the entrance hole of the union (an example in TABLE 5), allowing therefore the normal flow of the fuel towards the tank without changing in some way, but continuing to carring out the operations that until today have normally been completed by both the service-station attendant and the self-service consumer.

According to this innovation there are advantages for all and no limit of refuelling during the period of adaptation, in fact:
the old construction vehicles have an entrance hole greater than the dimensions of the bush 23 (picture 2), and moreover the exit mouth 22 (picture 2) of the diesel oil gun remains free to enter in whichever union of the vehicles feeded with diesel oil that already has been reduced of diameter by the manifacturing companies, up to a sufficient measure, so to be able to resupply the same vehicle;
for the vehicles that will install the mentioned union 1 (TABLE 1) and which will be resupplied by fuel near a distributor which still has not adapted the innovation, there will not exist any type of problem because the union 1 (TABLE 1), is equipped of a safety lever 6 (TABLE 1) which allows to push the opening cursor pushing it with a finger, and open therefore the safety door 4 (TABLE 1) allowing the flow of the fuel towards the tank. Another advantage of the present innovation is the possibility to install above-mentioned union also on cars, on which the union is not previewed by the home maker, because of specific constructions, adaptations and/or small changes which can be carried out on the tube, that brings the fuel to the tank or on the union installed by the houses manufacturers of the vehicles. The present innovation moreover is positively characterized by the fact that, taking into account the possible low costs for its production, it can be easy adopted by the automotive houses during the fabrication of cars or of the means that preview a diesel oil motor.

The present innovation has been described in an illustrative capacity, but not restrective, according to its favourite forms of realization, but it is important to understand that variations and/or changes could be brought by the experts of the branch without exiting, in this way, from the specific environment of protection, as is defined in the attached claims.

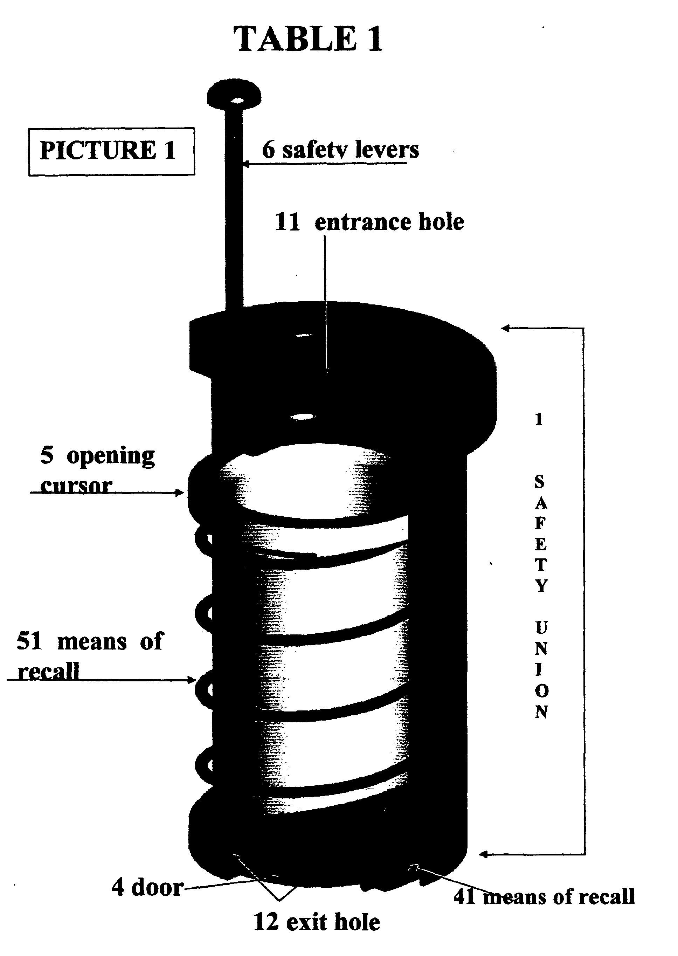

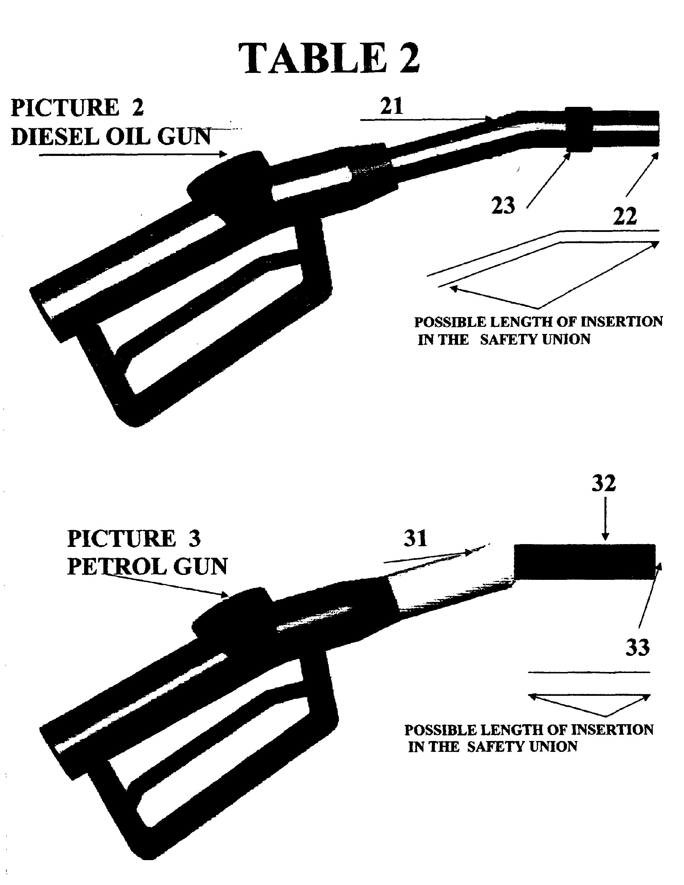

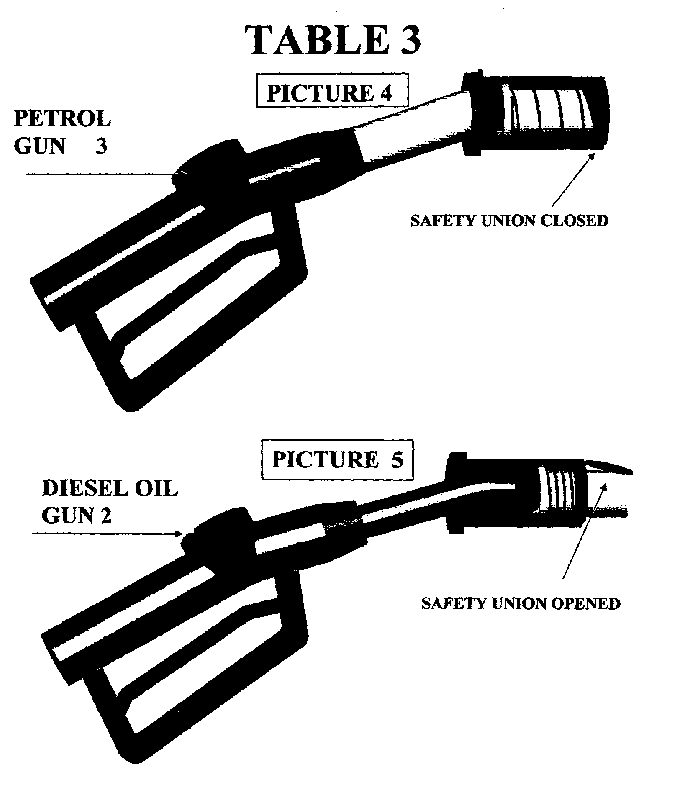

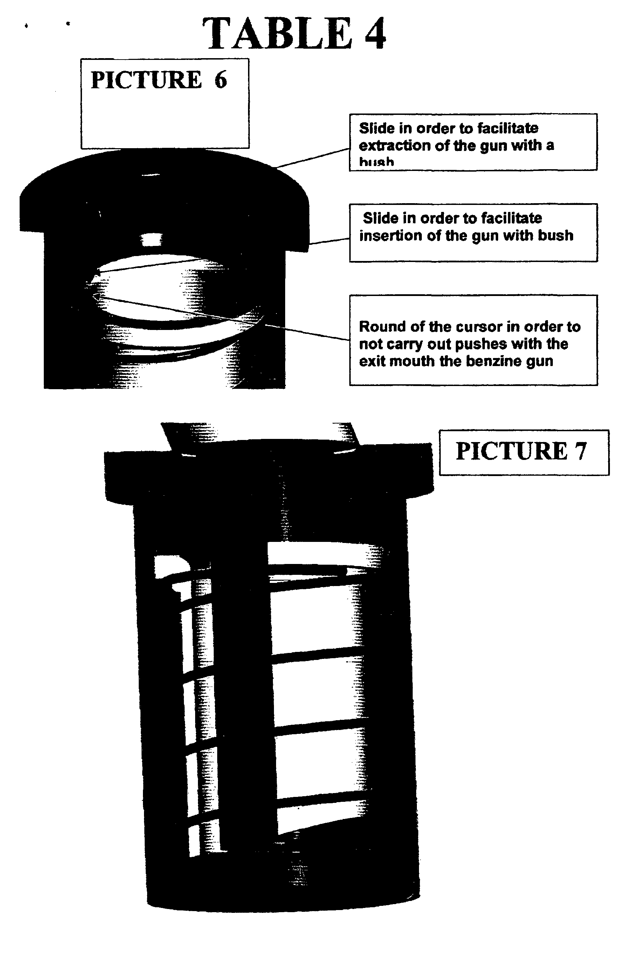

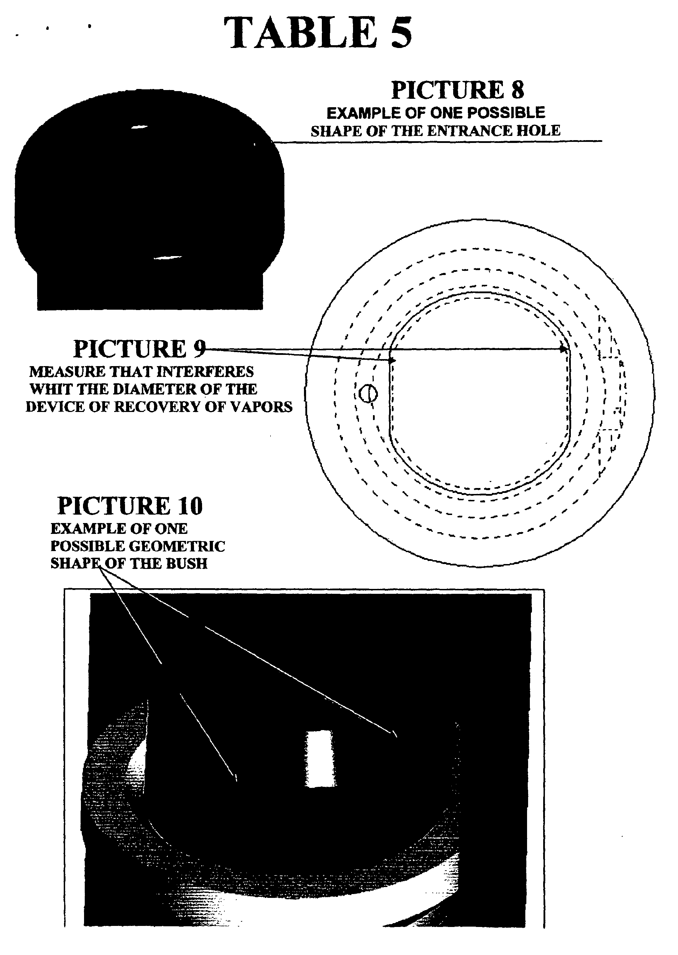

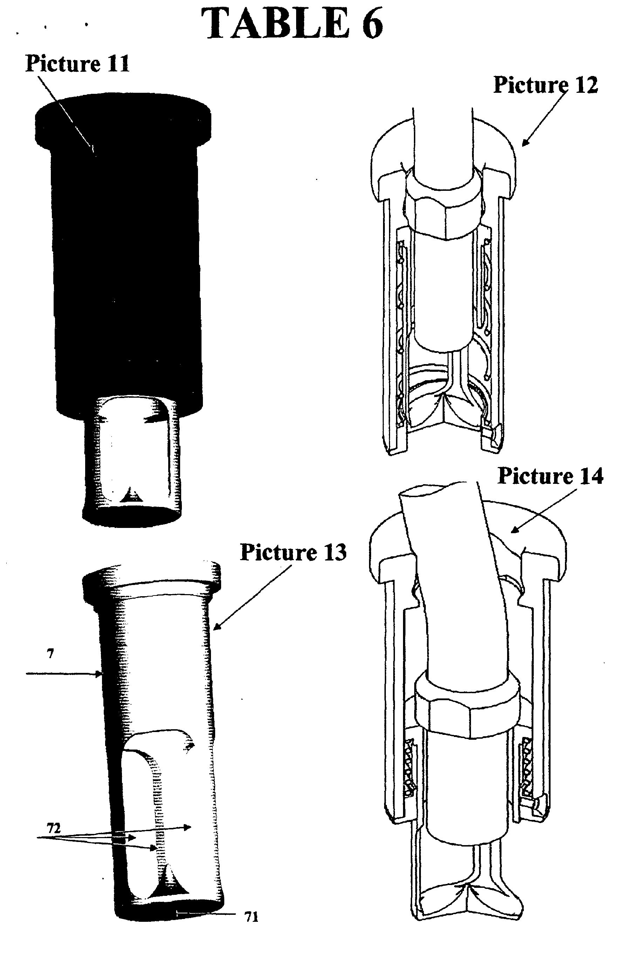

## Claims

1. Safety union with an opening cursor picture 1 (TABLE 1) for the fuel refuelling in vehicles feeded with diesel oil, installed on the entrance of a tube that brings the fuel to the tank and **characterized by** the fact of previewing an entrance hole 11 (TABLE 1) and an exit hole 12 (TABLE 1), the above-mentioned entrance hole allows the gun 2 (picture 2) of a diesel oil distributor on which has been opportunely installed a bush 23 (picture 2) to enter, to push the opening cursor 5 (TABLE 1) through the same bush and open the safety door 4 (TABLE 1), allowing the flow of the fuel towards the tank; on the contrary, the mentioned entrance hole 11 (TABLE 1) of the above-mentioned safety union 1 (TABLE 1) with the opening cursor 5 (TABLE 1) has a geometric shape (TABLE 5), that at least in one point has an inferior diameter than the one of the device previewed for the forced recovery of petrol vapors 31 (picture 3) and therefore prevents its entrance; this device is arranged coaxially and externally on a conduit 32 (picture 3) of a gun 3 (picture 3) for the petrol pump; the distance between the above-mentioned entrance hole 11 (TABLE 1) and above-mentioned exit hole 12 (TABLE 1) of the union (picture 1 TABLE 1) is greater than the distance between the above-mentioned device previewed for the forced recovery of vapors 31 (picture3) and the exit mouth 33 (picture 3) of mentioned conduit 32(picture 3); the union (TABLE 1) is **characterized by** the fact of previewing at least one safety door (4 TABLE 1) attached on the edge of the above-mentioned exit hole 12 (TABLE 1) so as to close, in a position of rest the light of the same exit hole; there are present means of callback 41 (TABLE 1) paired to the above-mentioned door 4 (TABLE 1) that normally maintain the above-mentioned exit hole closed 12 (TABLE 1) and the mentioned door 4 (TABLE 1), is opened only thanks to the action of the mentioned opening cursor 5 (TABLE 1) maintained in a position of rest by means of callback 51 (TABLE 1); it's important to evidence, for the above mentioned reasons, that the mentioned union 1 (TABLE 1) prevents the guns 3 (picture 3) of the petrol distributor, of being able to enter in a sufficient measure to open the mentioned safety door 4 (TABLE 1) and to erroneously resupply with petrol a vehicle feeded with diesel oil.

2. The safety union according to the claim 1, **characterized by** the fact of being able to be resupplied also in systems of fuel distribution with a traditional diesel oil gun 2 (picture 2), on which it has not been opportunely inserted a bush 23 (picture 2), simply pushing a safety lever 6 (TABLE 1), that allows to make the opening cursor slide through a finger push, at the same time opening the safety door 4 (TABLE 1), and allowing the outflow of the fuel towards the tank.

3. The safety union according to the claim 1, **characterized by** the fact that the above-mentioned means of callback can be constituted of a spring.

4. The safety union according to one of the previous claims, **characterized by** the fact of being able to have a substantially cylindrical shape.

5. The safety union according to one of the previous claims, **characterized by** the fact of being able to preview a hem to the entrance hole.

6. The safety union according to the claim 5, **characterised by** the fact that above-mentioned hem can comprise a lodging and/or one lock for a stopper.

7. The safety union according to all of the previous claims substantially as illustrated and described.
